# FASCICULE DE BREVET EUROPEEN

(11) **EP 1 936 732 B1**
(45) Date de publication et mention de la délivrance du brevet: **14.04.2010**
(21) Numéro de dépôt: 07291484.9
(22) Date de dépôt: 11.12.2007
(51) Int. Cl.: H01M 10/0525, H01M 10/0567, H01M 10/0568, H01M 10/0569, H01M 6/16, H01M 4/505, H01M 4/525, H01M 4/587

(54) **Accumulateur au lithium fonctionnant à très basse température**
Lithium-Akkumulator für Niedrigtemperaturbetrieb
Lithium accumulator operating at very low temperatures

(30) Priorité: 20.12.2006 FR 0611113
(43) Date de publication de la demande: 25.06.2008
(73) Titulaire: SAFT GROUPE SA, 93170 Bagnolet (FR)
(72) Inventeur: Biensan Philippe, La Marmette, 33360 Carignan Bordeaux (FR); Bonhomme, Frédéric, Brown Deer, WI, 53209 (US); Germond, David, 33110 Le Bouscat (FR); Laluque, Jean-Marc, 33480 Castelnau de Médoc (FR)
(74) Mandataire: Hirsch & Associés

(56) Documents cités:
- EP-A- 1 009 057
- EP-A- 1 675 209
- US-A1- 2005 191 553
- US-A1- 2005 214 646
- US-A1- 2006 172 202
- US-A1- 2006 236 528
- US-A1- 2006 240 327
- S. HERREYRE ET AL.: "New Li-ion electrolytes for low temperature applications" JOURNAL OF POWER SOURCES, vol. 97-98, juillet 2001 (2001-07), pages 576-580, XP004254575 ISSN: 0378-7753

## Description

### DOMAINE TECHNIQUE

La présente invention se rapporte au domaine des accumulateurs au lithium.

### ETAT DE LA TECHNIQUE

Un accumulateur au lithium possède un faisceau électrochimique qui comporte une électrode positive comprenant une matière électrochimiquement active capable d'insérer du lithium dans sa structure (généralement un oxyde de métal de transition le plus souvent lithié) et une électrode négative également capable d'insérer des ions lithium. Les électrodes sont placées de part et d'autre d'une membrane séparatrice généralement en polyoléfine. Le faisceau électrochimique est imprégné d'un électrolyte non aqueux solide ou liquide. L'électrolyte contient un sel de lithium dissous dans un mélange de solvants organiques.

Il est souhaitable de disposer d'accumulateurs lithium-ion capables d'atteindre une durée de vie d'au moins 500 cycles en cyclage à 4,2 V qui présentent une bonne chargeabilité et une bonne déchargeabilité à froid, ainsi qu'une bonne rétention de capacité en stockage à chaud.

L'électrolyte a un fort impact sur la perte irréversible de capacité de l'accumulateur au cours du cyclage. La perte irréversible de capacité de l'accumulateur est par exemple moins marquée en utilisant un électrolyte comprenant un mélange de carbonate d'éthylène/carbonate de diéthyle/carbonate de diméthyle (EC/DEC/DMC) qu'un électrolyte comprenant un mélange de carbonate d'éthyle/carbonate de diméthyle/acétate d'éthyle (EC/DMC/EA).

L'addition d'acétate d'éthyle a comme inconvénient de réduire la durée de vie en cyclage de l'accumulateur. Pour améliorer la durée de vie en cyclage de l'accumulateur, on ajoute à l'électrolyte une quantité importante de carbonate de vinylène (VC), en général plus de 4% v/v. Par exemple, le brevet FR-B-2 787 243 décrit un électrolyte pour accumulateur lithium-ion constitué d'un mélange EC/DMC/EA/VC dans les proportions volumiques de 14/24/57/5. Il est indiqué qu'un tel électrolyte permet d'utiliser l'accumulateur à des températures inférieures ou égales à -20°C.

L'addition de quantités importantes de carbonate de vinylène (>4% v/v) entraîne cependant une chute importante de la tension de l'accumulateur au début de la décharge à basse température.

On recherche donc un accumulateur apte à fonctionner à basse température, c'est-à-dire jusqu'à environ -50°C, et qui ne présente pas une chute importante de tension au début de la décharge.

Le document US 2004/0076887 décrit une composition d'électrolyte pour accumulateur lithium-ion. Il est dit que cette composition permet de remédier au problème de la faible conductivité ionique du bis(oxalato)borate de lithium (LiBOB) lorsqu'il est dissous dans un mélange binaire de solvants organiques. L'électrolyte décrit dans ce document comprend :
- du bis(oxalato)borate de lithium,
- un carbonate cyclique,
- un ou plusieurs composés choisis parmi les carbonates acycliques, les esters aliphatiques, les éthers alicycliques et les éthers aliphatiques difonctionnels,
- un ou plusieurs composés choisis parmi les lactones, les dinitriles, les composés contenant au moins un groupe ester d'acide carboxylique et un groupe éther, les composés contenant au moins un groupe ester d'acide carbonique et un groupe éther, les composés contenant au moins un groupe nitrile et un groupe éther, les esters d'acide trialkylphosphorique et les esters d'acide trialkylborique.

Le document DE-A-103 59 604 décrit une composition d'électrolyte pour accumulateur lithium-ion. Cet électrolyte présente une conductivité ionique élevée à basse température. Il comprend :
- du bis(oxalato)borate de lithium,
- un premier dialkylcarbonate ou un carbonate d'alkylène,
- un second dialkylcarbonate ou un carbonate d'alkylène,
- un troisième dialkylcarbonate ou un acétate d'alkyle.

Le document US2005/0026044 décrit un accumulateur lithium-ion dont l'électrolyte comprend :
- un ou plusieurs sels dont du bis(oxalato)borate de lithium,
- une ou plusieurs lactones, et
- un ou plusieurs solvants de faible viscosité tels qu'un carbonate linéaire ou un ester linéaire. Il est dit qu'un tel électrolyte présente une bonne conductivité ionique et que l'accumulateur possède une durée de vie élevée en cyclage.

Le document DE-A-103 46 651 décrit un électrolyte pour accumulateur lithium-ion. Cet électrolyte comprend un sel de bis(oxalato)borate de lithium et/ou de l'hexafluorophosphate de sodium LiPF₆ dissous dans un mélange comprenant :
- du carbonate d'éthylène,
- du 2-methylfurane, et
- au moins un solvant choisi dans le groupe comprenant le carbonate de propylène, le carbonate de diméthyle, le carbonate de diéthyle, le carbonate d'éthyle méthyle, le carbonate de butylène, l'acétate d'éthyle, l'acétate de méthyle, le propionate d'éthyle et le propionate de méthyle. L'accumulateur présente une durée de vie en cyclage améliorée.

Le document US 2005/0191553 décrit un accumulateur au lithium. A l'exemple 4, il est décrit que l'électrolyte de cet accumulateur est une composition comprenant du carbonate d'éthylène (EC) qui est un carbonate cyclique, 1 % en poids de carbonate de vinylène (VC) qui est un carbonate cyclique insaturé, 0,5 mole/L d'hexafluorophosphate de lithium (LiPF₆) et 0,5 mol/L de bis(oxalatoborate) de lithium (LiBOB).

Le document US 2006/0240327 décrit un accumulateur au lithium dont l'électrolyte est une composition comprenant un carbonate cyclique tel que le carbonate d'éthylène, de l'hexafluorophosphate de lithium LiPF₆, de préférence à une concentration de 1 mol/L, et un additif tel que le bis(oxalatoborate) de lithium LiBOB en une concentration allant de 0,001 à 0,15 mol/L.

Le document US 2006/0236528 décrit un accumulateur au lithium dont l'électrolyte est une composition comprenant un carbonate cyclique tel que le carbonate d'éthylène, de l'hexafluorophosphate de lithium LiPF₆, de préférence à une concentration de 1 mol/L, et un additif tel que le bis(oxalatoborate) de lithium LiBOB en une concentration allant de préférence de 0,001 à 2 mol/L.

Le document US 2005/0214646 décrit un accumulateur au lithium comprenant une anode capable d'insérer des ions lithium dans sa structure, une cathode également capable d'insérer du lithium et un électrolyte contenant un sel de lithium en solution dans un solvant non aqueux, tel qu'un carbonate cyclique insaturé comme la 1,3-dioxol-2-one (ou carbonate de vinylène VC). Les exemples 2.1-2.3, 3.10, 8.1 et 9.1 décrivent des compositions d'électrolytes comprenant un seul sel de lithium, en l'occurrence LiPF₆, et du carbonate de vinylène (VC), alors que les exemples 4.5, 4.7, 9.6 et 9.8 décrivent des compositions contenant à la fois LiPF₆ et LiBOB, sans VC.

Le document US 2006/0172202 décrit un accumulateur au lithium dont l'électrolyte est une composition comprenant un sel de lithium tel que LiPF₆ ou LiBOB, en solution dans un mélange de solvants choisis parmi le carbonate d'éthylène (EC), l'acétate de méthyle (MA), l'acétate d'éthyle (EA) et le carbonate d'éthyle-méthyle (EMC).

Le document EP-A-1 675 209 décrit un accumulateur au lithium fonctionnant à très basse température ainsi qu'un mélange de solvants pour l'électrolyte d'un tel accumulateur, lequel mélange de solvants comprend par rapport au volume dudit mélange, 50 à 95 % en volume d'un ester linéaire d'un acide saturé en C₂ à C₈, et de 5 à 50 % en volume d'un carbonate cyclique saturé en C₃ à C₆ et d'un carbonate linéaire saturé en C₃ à C₆, l'un seulement des deux carbonates étant substitué par au moins un atome d'halogène.

L'article « New Li-ion electrolytes for low temperature applications » publié dans Journal of Power Sources 97-98 (2001) 576 - 580 décrit de nouvelles compositions d'électrolytes au lithium pour application à basse température, ces compositions étant constituées de sels de lithium tels que LiPF₆ en solution dans des mélanges de solvants choisis parmi les carbonates cycliques, tels que EC ou PC, les carbonates linéaires tels que le carbonate de diméthyle (DMC) ou le carbonate de diéthyle (DEC) et les esters linéaires tels que l'acétate d'éthyle (EA) ou le butyrate de méthyle (MB), avec éventuellement adjonction de carbonate de vinylène (VC).

Aucun de ces documents ne résout le problème de la chute importante de tension d'un accumulateur au lithium au début d'une décharge à basse température.

### RESUME DE L'INVENTION

L'invention a pour objet une composition comprenant :
- de 5 à 50% v/v d'au moins un carbonate en C₃ à C₆ ou d'une lactone,
- de 50 à 95% v/v d'au moins un ester linéaire d'un acide saturé en C₂ à C₈,
- au moins un carbonate cyclique insaturé en une proportion v/v inférieure à 5% du volume des autres constituants de la composition,
- de l'hexafluorophosphate de lithium LiPF₆,
- au moins 0,2 mol/l de bis(oxalatoborate) de lithium.

L'association du sel d'hexafluorophosphate de lithium, du sel de bis(oxalatoborate) de lithium (LiBOB) et du carbonate cyclique insaturé permet d'empêcher la chute importante de tension de l'accumulateur lithium-ion en début de décharge.

Selon un mode de réalisation, la proportion v/v de carbonate cyclique insaturé est supérieure à 0,5% du volume des autres constituants de la composition.

Selon un mode de réalisation, le carbonate est un carbonate cyclique saturé. Le carbonate cyclique saturé est choisi parmi le carbonate d'éthylène, le carbonate de propylène, le carbonate de butylène ou un mélange de ceux-ci. De préférence, le carbonate cyclique saturé est le carbonate d'éthylène.

Selon un mode de réalisation, la composition comprend en outre un carbonate linéaire. Le carbonate linéaire est choisi parmi le carbonate de diméthyle, le carbonate de diéthyle, le carbonate d'éthyle-méthyle, le carbonate de méthyle propyle ou un mélange de ceux-ci. De préférence, le carbonate linéaire est le carbonate de diméthyle.

Selon un mode de réalisation, la lactone est choisie dans le groupe comprenant la gamma-butyrolactone et la gamma-valerolactone ou un mélange de celles-ci.

Selon un mode de réalisation, l'ester linéaire est choisi parmi l'acétate d'éthyle, l'acétate de méthyle, l'acétate de propyle, le butyrate d'éthyle, le butanoate de méthyle, le butanoate de propyle, le propionate d'éthyle, le propionate de méthyle, le propionate de propyle. De préférence, l'ester linéaire est l'acétate d'éthyle.

Selon un mode de réalisation, le carbonate cyclique insaturé est le carbonate de vinylène.

Selon un mode de réalisation, le pourcentage v/v de carbonate cyclique insaturé est inférieur ou égal à 2%.

Selon un mode de réalisation, la proportion volumique du carbonate en C₃ à C₆ ou de la lactone est de 10-40 % et la proportion volumique de l'ester linéaire est de 60-90 %.

Selon un mode de réalisation, la proportion volumique du carbonate en C₃ à C₆ ou de la lactone est de 20-30 % et la proportion volumique de l'ester linéaire est de 80-70 %.

Selon un mode de réalisation, la composition comprend du carbonate d'éthylène, du carbonate de diméthyle et de l'acétate d'éthyle et les proportions volumiques de carbonate d'éthylène, de carbonate de diméthyle et d'acétate d'éthyle sont respectivement de 10-20 %, 20-30 % et 50-70 %.

Selon un mode de réalisation, la concentration de bis(oxalatoborate) de lithium dissous dans l'électrolyte est inférieure à 0,5 mol/l.

Selon un mode de réalisation, la concentration totale en sel de lithium est comprise entre 1 mol/l et 1,5 mol/l.

Selon un mode de réalisation, le rapport molaire de bis(oxalatoborate) de lithium sur l'hexafluorophosphate de lithium est inférieur à 1.

Cette composition peut être utilisée comme électrolyte d'un accumulateur lithium-ion.

L'invention a également pour objet un accumulateur lithium-ion comprenant la composition selon l'invention comme électrolyte liquide.

L'accumulateur lithium-ion selon l'invention est adapté pour fonctionner à des températures pouvant aller jusqu'à environ -50°C.

Selon un mode de réalisation, l'accumulateur au lithium comprend :
- au moins une électrode positive contenant un oxyde mixte de lithium et d'un élément de transition tel que Co, Ni et Mn.
- au moins une électrode négative contenant une matière électrochimiquement active qui est un carbone apte à insérer des ions lithium, et
- la composition précédemment décrite en tant qu'électrolyte liquide.

Selon une caractéristique, l'accumulateur est adapté pour fonctionner à des températures jusqu'à environ -50°C.

L'invention a donc également pour objet l'utilisation de l'accumulateur à des températures pouvant aller jusqu'à environ -50°C.

L'accumulateur selon l'invention peut être utilisé en cyclage à température ambiante pendant au moins 500 cycles avant que la perte irréversible de capacité ne dépasse 20% de la capacité initiale de l'accumulateur.

Enfin, l'accumulateur selon l'invention présente, dans des conditions de stockage à chaud (température inférieure ou égale à 60°C), une perte irréversible de capacité plus faible qu'un accumulateur lithium-ion dont l'électrolyte ne contient pas de sel de bis(oxalatoborate) de lithium.

### BREVE DESCRIPTION DES FIGURES

La Figure 1 représente la perte irréversible de capacité de différents types d'accumulateurs au lithium soumis à un test de cyclage à température ambiante ; chaque cycle comprenant une charge au régime de C et une décharge au régime de C/2. Le test de cyclage est réalisé sur environ 700 cycles.

Les Figures 2A et 2B représentent les courbes de décharge d'accumulateurs lithium-ion aux températures respectives de -30°C et -40°C, aux régimes de C/5 et C.

La Figure 3 représente la perte irréversible de capacité pour différents types d'accumulateurs soumis à un test de stockage à haute température (40°C). Au cours de ce test, les accumulateurs sont maintenus à 40°C à 4,2 V (« floating »). Ils sont déchargés périodiquement afin de contrôler leur capacité.

### EXPOSE DETAILLE DES MODES DE REALISATION DE L'INVENTION

La présence simultanée d'hexafluorophosphate de lithium (LiPF₆), de bis(oxalatoborate) de lithium (LiBOB) et de carbonate cyclique insaturé permet la formation d'une couche de passivation sur l'électrode négative de l'accumulateur. Sans vouloir être liée par la théorie, la Demanderesse pense que cette couche de passivation joue un rôle important dans la polarisation de l'électrode négative et que la modification de la nature de la couche de passivation, permet d'obtenir une tension en décharge plus élevée de l'accumulateur à basse température.

Le bis(oxalatoborate) de lithium (LiBOB) dont la formule est indiquée ci-après contribue de manière différente à la formation de la couche de passivation formée à la surface de l'électrode négative.

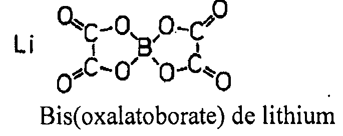

On substitue une partie de LiPF₆ par LiBOB.

La concentration de bis(oxalatoborate) de lithium dissous dans l'électrolyte est généralement inférieure à 0,5 mol/l.

Selon un mode de réalisation, la concentration totale en sel de lithium est comprise entre 1 mol/l et 1,5 mol/l.

Selon un mode de réalisation, la concentration en LiPF₆ est comprise entre 0,5 mol/l et 1,3 mol/l.

Selon un mode de réalisation, le rapport molaire de bisoxalatoborate de lithium sur l'hexafluorophosphate de lithium est inférieur à 1.

Selon un mode de réalisation, le carbonate de la composition est un carbonate cyclique saturé. Le carbonate cyclique saturé peut être choisi parmi le carbonate d'éthylène, le carbonate de propylène, le carbonate de butylène ou un mélange de ceux-ci.

Selon un mode préféré de réalisation, le carbonate cyclique saturé est le carbonate d'éthylène.

Selon un mode de réalisation, la composition comprend un carbonate linéaire. Ce carbonate linéaire peut être choisi parmi le carbonate de diméthyle, le carbonate de diéthyle, le carbonate d'éthyle-méthyle, le carbonate de méthyle propyle ou un mélange de ceux-ci.

Selon un mode préféré de réalisation, le carbonate linéaire est le carbonate de diméthyle.

Selon un mode de réalisation, la composition comprend une lactone ; cette lactone peut être choisie dans le groupe comprenant la gamma-butyrolactone et la gamma-valerolactone ou un mélange de celles-ci.

Selon l'invention, la composition contient un ester linéaire d'un acide saturé en C₂ à C₈. L'addition d'au moins un ester linéaire d'un acide saturé en C₂ à C₈ a pour avantage d'augmenter la capacité déchargée à basse température, notamment en régime de décharge rapide, c'est-à-dire à un courant de décharge supérieur à C/1, C étant la capacité nominale de l'accumulateur.

On entend en général par ester linéaire d'un acide saturé ou carboxylate aliphatique saturé, un composé de formule R-CO-OR' dans laquelle R est H ou un groupe alkyle et R' est un groupe alkyle tel que CH₃ (méthyle), CH₃-CH₂ (éthyle), etc. Le dit ester linéaire d'un acide monocarboxylique aliphatique saturé est par exemple un formiate si R est H, un acétate si R est CH₃, un propionate si R est CH₃-CH₂, un butyrate si R est CH₃-(CH₂)₂, un valériate si R est CH₃-(CH₂)₃, etc.

L'ester linéaire peut être choisi parmi l'acétate d'éthyle, l'acétate de méthyle, l'acétate de propyle, le butyrate d'éthyle, le butanoate de méthyle, le butanoate de propyle, le propionate d'éthyle, le propionate de méthyle, le propionate de propyle.

Selon un mode préféré de réalisation, l'ester linéaire est l'acétate d'éthyle.

Font partie de la famille des carbonates cycliques insaturés les composés tels que le carbonate de vinylène (VC) et ses dérivés, notamment le carbonate de propylidène, le carbonate d'éthylidène éthylène, le carbonate d'isopropylidène éthylène. On entend par dérivés du carbonate de vinylène, des composés possédant au moins une liaison insaturée à un atome de carbone du cycle, comme par exemple, le carbonate de propylidène, le carbonate d'éthylidène éthylène (ou 4-éthylidène 1-3 dioxolane 2 one), ou le carbonate d'isopropylidène éthylène (ou 4-isopropylidène 1-3 dioxolane 2 one).

Selon un mode de réalisation, le carbonate cyclique insaturé est le carbonate de vinylène. La composition selon l'invention permet de réduire la quantité de carbonate cyclique insaturé. La composition selon l'invention contient une proportion de carbonate cyclique insaturé inférieure à 5% v/v du volume des autres constituants. De préférence, le pourcentage v/v de carbonate cyclique insaturé est inférieur ou égal à 2%.

Selon un mode de réalisation, la proportion v/v de carbonate cyclique insaturé est supérieure à 0,5% du volume des autres constituants de la composition.

Selon l'invention, la composition comprend :
- de 5 à 50% v/v dudit au moins un carbonate en C₃ à C₆ ou de ladite lactone,
- de 50 à 95% v/v d'au moins un ester linéaire d'un acide saturé en C₂ à C₈.

Selon un mode de réalisation, la proportion volumique du carbonate en C₃ à C₆ ou de la lactone est de 10-40 % et la proportion volumique de l'ester linéaire est de 60-90 %.

Selon un mode de réalisation, la proportion volumique du carbonate en C₃ à C₆ ou de la lactone est de 20-30 % et la proportion volumique de l'ester linéaire est de 80-70 %.

Selon un mode de réalisation préféré, la composition de l'invention contient du carbonate d'éthylène, du carbonate de diméthyle et de l'acétate d'éthyle, et les proportions volumiques de carbonate d'éthylène, de carbonate de diméthyle et d'acétate d'éthyle sont respectivement de 10-20 %, 20-30 % et 50-70 %.

La composition selon l'invention est utilisée comme électrolyte d'un accumulateur au lithium. Cet accumulateur comprend typiquement :
- au moins une électrode positive contenant un oxyde mixte de lithium et d'un élément de transition tel que Co, Ni et Mn,
- au moins une électrode négative contenant une matière électrochimiquement active qui est un carbone apte à insérer des ions lithium,
- la composition selon l'invention en tant qu'électrolyte liquide.

Le liant de l'électrode négative comprend de préférence un polymère non fluoré choisi parmi : copolymère de styrène et de butadiène, copolymère d'acrylonitrile et de butadiène, homopolymère de l'acide acrylique, carboxyméthylcellulose et les mélanges de ceux-ci.

Selon un mode de réalisation, le polymère est un mélange d'un copolymère de styrène et de butadiène et de carboxyméthylcellulose. De préférence, la proportion pondérale du copolymère de styrène et de butadiène est comprise entre 30 et 70 % dudit liant et la proportion pondérale de carboxyméthylcellulose est comprise entre 30 et 70 % dudit liant.

L'accumulateur selon l'invention est adapté pour fonctionner à des températures jusqu'à environ -50°C. Il présente non seulement une tension élevée en décharge à basse température (jusqu'à -50°C) mais également une bonne durée de vie en cyclage à température ambiante. En effet, un tel accumulateur présente une perte irréversible de capacité inférieure ou égale à 20% après 500 cycles.

La présente invention a aussi pour objet l'utilisation d'un tel générateur à des températures allant jusqu'à -50°C.

D'autres caractéristiques et avantages de la présente invention apparaîtront au cours des exemples suivants de réalisation, donnés à titre illustratif et non limitatif.

### EXEMPLES

L'impact de différentes compositions d'électrolyte sur la durée de vie en cyclage ainsi que sur les performances à froid a été évalué. Les compositions des électrolytes testés sont rassemblées dans le tableau 1 :

**Tableau 1 : Compositions des électrolytes testés**

| Référence de la composition | Proportion volumique de carbonate et d'ester | Proportion volumique de VC (carbonate cyclique insaturé) | Concentration en LiPF₆ (mol/l) | Concentration en LiBOB (mol/l) |
|---|---|---|---|---|
| A | EC/DMC/EA (15/25/60) | 2% | 1,5 | 0 |
| B | EC/DMC/EA (15/25/60) | 5% | 1,5 | 0 |
| C | EC/DMC/EA (15/25/60) | 2% | 1 | 0,05 |
| D | EC/DMC/EA (15/25/60) | 2% | 1,4 | 0,1 |
| E | EC/DMC/EA (15/25/60) | 0% | 1,25 | 0,25 |
| F | EC/DMC/EA (15/25/60) | 2% | 1,25 | 0,25 |

Les compositions A et B ne contiennent pas de LiBOB. Elles ne font donc pas partie de l'invention.

Les compositions C et D contiennent LiBOB en une concentration inférieure à 0,2 mol/l. Elles ne font donc pas partie de l'invention.

La composition E ne contient pas de carbonate cyclique insaturé. Elle ne fait donc pas partie de l'invention.

La composition F est une composition selon l'invention.

Les tests ont été réalisés avec des éléments électrochimiques de capacité nominale de 2,7Ah et de tension à l'état chargé de 4,2V. L'électrode positive à base de LiCoO₂ est identique dans tous les éléments. L'électrode négative est à base de graphite.

### Description des tests effectués :

a) Le test de cyclage à température ambiante a été réalisé à un régime de C en charge et C/2 en décharge dans une plage de tension allant de 2,7 à 4,2V.
b) Le test de cyclage à basse température a été réalisé comme suit :
   Charge C/5 à température ambiante, décharge à C/5 ou C à -30°C ou -40°C.
c) Le test de stockage a été effectué en plaçant les accumulateurs dans une enceinte à 40°C. Les accumulateurs sont maintenus à 4,2V. Leur capacité est mesurée à température ambiante après 15, 30, 60, 89 et 120 jours de stockage.

### RESULTATS

### a) test de durée de vie en cyclage à température ambiante :

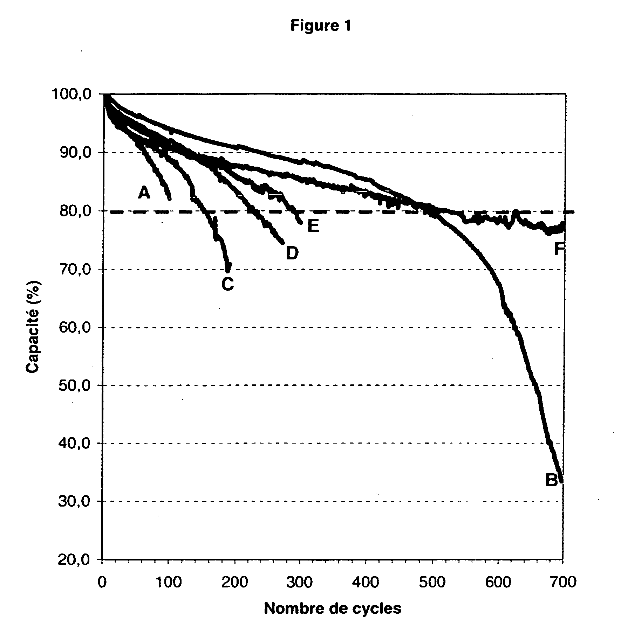

La figure 1 montre que l'utilisation d'un électrolyte contenant 0,25 mol/l de LiBOB et 2%VC (Electrolyte F) permet d'atteindre une durée de vie en cyclage de 500 cycles pour une perte de capacité de 20%. Ce résultat est équivalent à celui obtenu avec un électrolyte contenant 5% de carbonate de vinylène sans LiBOB. (Electrolyte B).

L'accumulateur comprenant l'électrolyte F selon l'invention possède une durée de vie bien supérieure aux accumulateurs A, C et D qui, soit ne contiennent pas de LiBOB, soit en contiennent mais en quantité insuffisante.

L'accumulateur comprenant l'électrolyte F selon l'invention possède une durée de vie bien supérieure à l'accumulateur E dont l'électrolyte ne contient pas de carbonate de vinylène.

### b) test de performance à basse température :

Les performances en décharge à C/5 et C à -30°C d'un accumulateur comprenant l'électrolyte F sont comparées avec celles :
- d'un accumulateur dont l'électrolyte contient 5% de carbonate de vinylène et ne contient pas LiBOB (Electrolyte B),
- d'un accumulateur dont l'électrolyte contient 2% de carbonate de vinylène et ne contient pas LiBOB (Electrolyte A).

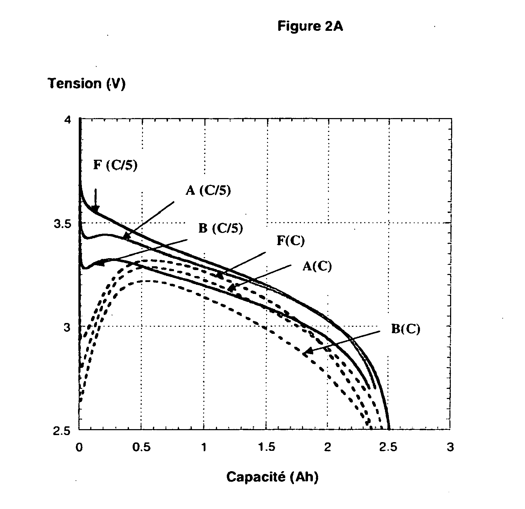

Les résultats du test sont représentés Figure 2A. Pour la décharge au régime de C/5, la tension de l'accumulateur avec électrolyte F est supérieure à celle des accumulateurs A et B. De plus, la tension de l'accumulateur comprenant l'électrolyte F ne chute pas brutalement.

Pour la décharge plus rapide au régime de C, la tension de l'accumulateur avec électrolyte F est supérieure à celle des accumulateurs comprenant les électrolytes A et B.

Les performances en décharge à C/5 et C à -40°C d'un accumulateur comprenant l'électrolyte F sont comparées avec celles d'un accumulateur dont l'électrolyte contient 5% de carbonate de vinylène et ne contient pas LiBOB (Electrolyte B),

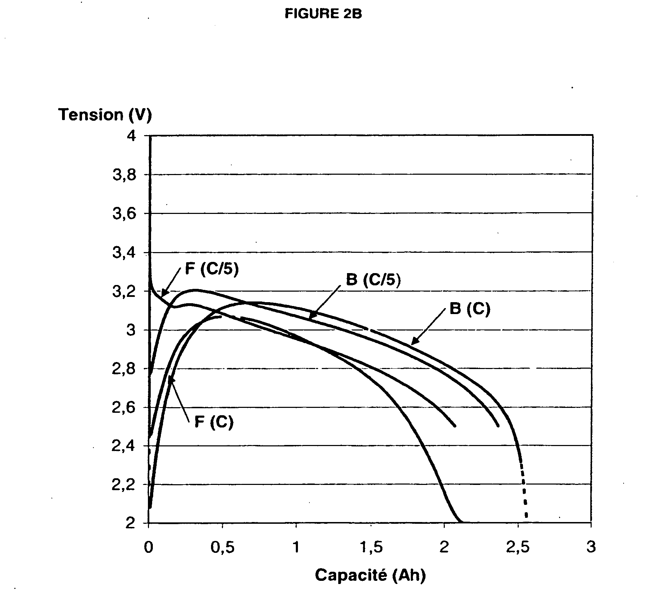

Les résultats du test sont représentés Figure 2B. Pour les décharges aux courants de C/5 et C, l'accumulateur comprenant l'électrolyte F présente une chute de tension en début de décharge plus faible que l'accumulateur comprenant l'électrolyte B.

### c) test de capacité des accumulateurs au cours d'un stockage en charge à 4,2V à 40°C.

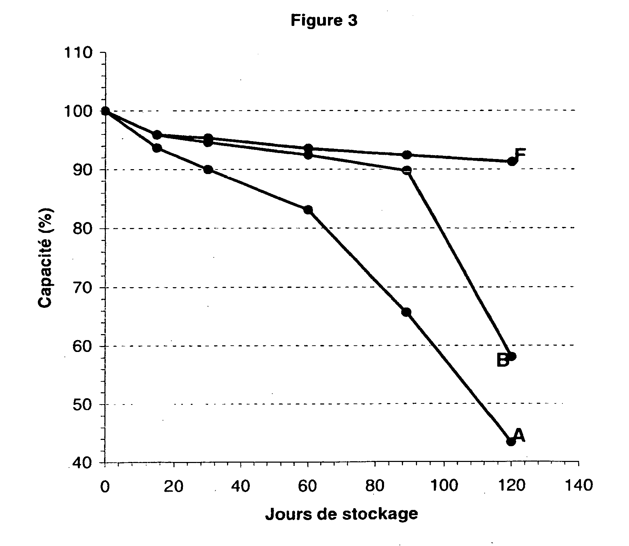

Les résultats du test sont représentés Figure 3. La perte de capacité de l'accumulateur comprenant l'électrolyte F est lente. Cette perte de capacité n'est que d'environ 10% après 120 jours de stockage.

Au contraire, l'accumulateur comprenant l'électrolyte A avec 2% de VC présente une chute rapide de sa capacité dès le début du test. Après 120 jours de stockage, la perte de capacité de l'accumulateur est de 55%. Dans les mêmes conditions, la perte de capacité de l'accumulateur comprenant l'électrolyte B après 120 jours de stockage est d'environ 40%.

En conclusion, l'accumulateur comprenant l'électrolyte F permet de combiner bonne durée de vie, bonnes performances à froid et une perte de capacité en stockage réduite, en comparaison avec un électrolyte ne contenant pas de LiBOB.

## Revendications

1. Composition comprenant :
- de 5 à 50% v/v d'au moins une carbonate en C₃ à C₆ ou d'une lactone, ,
- de 50 à 95% v/v d'au moins un ester linéaire d'un acide saturé en C₂ à C₈.
- au moins un carbonate cyclique insaturé en une proportion v/v inférieure à 5% du volume des autres constituants de la composition,
- de l'hexafluorophosphate de lithium LiPF₆,
- au moins 0,2 mol/l de bis(oxalatoborate) de lithium.

2. Composition selon la revendication 1, dans laquelle la proportion v/v de carbonate cyclique insaturé est supérieure à 0,5% du volume des autres constituants de la composition.

3. Composition selon la revendication 1, ou 2, dans laquelle le carbonate est un carbonate cyclique saturé.

4. Composition selon la revendication 3, dans laquelle le carbonate cyclique saturé est choisi parmi le carbonate d'éthylène, le carbonate de propylène, le carbonate de butylène ou un mélange de ceux-ci.

5. Composition selon la revendication 4, dans laquelle le carbonate cyclique saturé est le carbonate d'éthylène.

6. Composition selon l'une des revendications précédentes, comprenant en outre un carbonate linéaire.

7. Composition selon la revendication 6, dans laquelle le carbonate linéaire est choisi parmi le carbonate de diméthyle, le carbonate de diéthyle, le carbonate d'éthyle-méthyle, le carbonate de méthyle propyle ou un mélange de ceux-ci.

8. Composition selon la revendication 7, dans laquelle le carbonate linéaire est le carbonate de diméthyle.

9. Composition selon l'une des revendications précédentes, dans laquelle la lactone est choisie dans le groupe comprenant la gamma-butyrolactone et la gamma-valerolactone ou un mélange de celles-ci.

10. Composition selon l'une des revendications 1-9, dans laquelle l'ester linéaire est choisi parmi l'acétate d'éthyle, l'acétate de méthyle, l'acétate de propyle, le butyrate d'éthyle, le butanoate de méthyle, le butanoate de propyle, le propionate d'éthyle, le propionate de méthyle, le propionate de propyle.

11. Composition selon la revendication 10, dans laquelle l'ester linéaire est l'acétate d'éthyle.

12. Composition selon l'une des revendications précédentes dans laquelle le carbonate cyclique insaturé est le carbonate de vinylène.

13. Composition selon l'une des revendications précédentes dans laquelle le pourcentage v/v de carbonate cyclique insaturé est inférieur ou égal à 2%.

14. Composition selon l'une des revendications 1-13, dans laquelle la proportion volumique du carbonate en C₃ à C₆ ou de la lactone est de 10-40 % et la proportion volumique de l'ester linéaire est de 60-90 %.

15. Composition selon l'une des revendications 1-14, dans laquelle la proportion volumique du carbonate en C₃ à C₆ ou de la lactone est de 20-30 % et la proportion volumique de l'ester linéaire est de 80-70 %.

16. Composition selon l'une des revendications 1-15, comprenant du carbonate d'éthylène, du carbonate de diméthyle et de l'acétate d'éthyle et dans laquelle les proportions volumiques de carbonate d'éthylène, de carbonate de diméthyle et d'acétate d'éthyle sont respectivement de 10-20 %, 20-30 % et 50-70 %.

17. Composition selon l'une des revendications précédentes, dans laquelle la concentration de bis(oxalatoborate) de lithium dissous dans l'électrolyte est inférieure à 0,5 mol/l.

18. Composition selon l'une des revendications précédentes, dans laquelle la concentration totale en sel de lithium est comprise entre 1 mol/l et 1,5 mol/l.

19. Composition selon l'une des revendications précédentes, dans laquelle le rapport molaire de bis(oxalatoborate) de lithium sur l'hexafluorophosphate de lithium est inférieur à 1.

20. Accumulateur au lithium comprenant :
- au moins une électrode positive contenant un oxyde mixte de lithium et d'un élément de transition tel que Co, Ni et Mn.
- au moins une électrode négative contenant une matière électrochimiquement active qui est un carbone apte à insérer des ions lithium, et
- la composition selon l'une des revendications précédentes en tant qu'électrolyte liquide.

21. Accumulateur selon la revendication 20, adapté pour fonctionner à des températures jusqu'à environ -50°C.

22. Utilisation d'un accumulateur selon l'une des revendications 20 ou 21, à des températures jusqu'à environ -50°C.

## Claims

1. A composition comprising:
- 5 to 50% v/v of at least one C₃-C₆ carbonate or a lactone,
- 50 to 95% v/v of at least one linear ester of a C₂-C₈ saturated acid
- at least one unsaturated cyclic carbonate in a v/v proportion less than 5% of the volume of the other constituents of the composition,
- lithium hexafluorophosphate (LiPF₆),
- at least 0.2 mol/l lithium bis(oxalatoborate).

2. The composition according to claim 1, in which the v/v proportion of unsaturated cyclic carbonate is greater than 0.5% of the volume of the other constituents of the composition.

3. The composition according to claim 1 or 2, in which the carbonate is a saturated cyclic carbonate.

4. The composition according to claim 3, in which the saturated cyclic carbonate is chosen from ethylene carbonate, propylene carbonate, butylene carbonate or a mixture thereof.

5. The composition according to claim 4, in which the saturated cyclic carbonate is ethylene carbonate.

6. The composition according to one of the previous claims, also comprising a linear carbonate.

7. The composition according to claim 6, in which the linear carbonate is chosen from dimethyl carbonate, diethyl carbonate, ethyl-methyl carbonate, methylpropyl carbonate or a mixture thereof.

8. The composition according to claim 7, in which the linear carbonate is dimethyl carbonate.

9. The composition according to one of the previous claims, in which the lactone is chosen from the group comprising gamma-butyrolactone and gamma-valerolactone or a mixture thereof.

10. The composition according to one of claims 1-9, in which the linear ester is chosen from ethyl acetate, methyl acetate, propyl acetate, ethyl butyrate, methyl butanoate, propyl butanoate, ethyl propionate, methyl propionate, propyl propionate.

11. The composition according to claim 10, in which the linear ester is ethyl acetate.

12. The composition according to one of the previous claims, in which the unsaturated cyclic carbonate is vinylene carbonate.

13. The composition according to one of the previous claims, in which the percentage v/v of unsaturated cyclic carbonate is less than or equal to 2%.

14. The composition according to one of claims 1-13, in which the proportion by volume of the C₃-C₆ carbonate or of the lactone is 10-40 % and the proportion by volume of the linear ester is 60-90 %.

15. The composition according to one of claims 1-14, in which the proportion by volume of the C₃-C₆ carbonate or of the lactone is 20-30 % and the proportion by volume of the linear ester is 80-70 %.

16. The composition according to one of claims 1 to 15, comprising ethylene carbonate, dimethyl carbonate and ethyl acetate and in which the proportion by volume of the ethylene carbonate, dimethyl carbonate and ethyl acetate are respectively 10-20 %, 20-30 % and 50-70 %.

17. The composition according to one of the previous claims, in which the concentration of lithium bis(oxalatoborate) dissolved in the electrolyte is less than 0.5 mol/l.

18. The composition according to one of the previous claims, in which the total concentration of lithium salt is comprised between 1 mol/l and 1.5 mol/l.

19. The composition according to one of the previous claims, in which the molar ratio of lithium bis(oxalatoborate) to lithium hexafluorophosphate is less than 1.

20. A lithium battery comprising:
- at least one positive electrode containing a mixed oxide of lithium and a transition element such as Co, Ni and Mn.
- at least one negative electrode containing an electrochemically active material which is a carbon suitable for inserting lithium ions, and
- the composition according to one of the previous claims as a liquid electrolyte.

21. The battery according to claim 20, suitable for operation at temperatures down to about -50°C.

22. The use of a battery according to one of claims 20 or 21, at temperatures down to about -50°C.

## Patentansprüche

1. Zusammensetzung, die Folgendes umfasst:
- von 5 bis 50 Vol./Vol.-% mindestens eines C₃- bis C₆-Carbonats oder eines Lactons,
- von 50 bis 95 Vol./Vol.-% mindestens eines linearen Esters einer gesättigten C₂- bis C₈-Säure,
- mindestens ein ungesättigtes cyclisches Carbonat in einem Volumenverhältnis Vol./Vol., das weniger als 5 % des Volumens der anderen Bestandteile der Zusammensetzung ausmacht,
- Lithiumhexafluorphosphat LiPF₆,
- mindestens 0,2 mol/l Lithiumbis(oxalatoborat).

2. Zusammensetzung nach Anspruch 1, in der das Volumenverhältnis Vol./Vol. des ungesättigten cyclischen Carbonats mehr als 0,5 % des Volumens der anderen Bestandteile der Zusammensetzung ausmacht.

3. Zusammensetzung nach Anspruch 1 oder 2, in der es sich bei dem Carbonat um ein gesättigtes cyclisches Carbonat handelt.

4. Zusammensetzung nach Anspruch 3, in der das gesättigte cyclische Carbonat aus Ethylencarbonat, Propylencarbonat, Butylencarbonat oder einem Gemisch dieser ausgewählt ist.

5. Zusammensetzung nach Anspruch 4, in der es sich bei dem gesättigten cyclischen Carbonat um Ethylencarbonat handelt.

6. Zusammensetzung nach einem der vorhergehenden Ansprüche, die außerdem ein lineares Carbonat umfasst.

7. Zusammensetzung nach Anspruch 6, in der das lineare Carbonat aus Dimethylcarbonat, Diethylcarbonat, Ethylmethylcarbonat, Propylmethylcarbonat oder einem Gemisch dieser ausgewählt ist.

8. Zusammensetzung nach Anspruch 7, in der es sich bei dem linearen Carbonat um Dimethylcarbonat handelt.

9. Zusammensetzung nach einem der vorhergehenden Ansprüche, in der das Lacton aus der Gruppe ausgewählt ist, die Gammabutyrolacton und Gammavalerolacton oder ein Gemisch dieser umfasst.

10. Zusammensetzung nach einem der Ansprüche 1 - 9, in der der lineare Ester aus Ethylacetat, Methylacetat, Propylacetat, Ethylbutyrat, Methylbutanoat, Propylbutanoat, Ethylpropionat, Methylpropionat, Propylpropionat ausgewählt ist.

11. Zusammensetzung nach Anspruch 10, in der es sich bei dem linearen Ester um Ethylacetat handelt.

12. Zusammensetzung nach einem der vorhergehenden Ansprüche, in der es sich bei dem ungesättigten cyclischen Carbonat um Vinylencarbonat handelt.

13. Zusammensetzung nach einem der vorhergehenden Ansprüche, in der der Volumenprozentanteil Vol./Vol. des ungesättigten cyclischen Carbonats weniger als oder gleich 2 % beträgt.

14. Zusammensetzung nach einem der Ansprüche 1 - 13, in der das Volumenverhältnis des C₃- bis C₆-Carbonats oder des Lactons 10 - 40 % beträgt und das Volumenverhältnis des linearen Esters 60 - 90 % beträgt.

15. Zusammensetzung nach einem der Ansprüche 1 - 14, in der das Volumenverhältnis des C₃- bis C₆-Carbonats oder des Lactons 20 - 30 % beträgt und das Volumenverhältnis des linearen Esters 80 - 70 % beträgt.

16. Zusammensetzung nach einem der Ansprüche 1 - 15, die Ethylencarbonat, Dimethylcarbonat und Ethylacetat umfasst und in der das Volumenverhältnis des Ethylencarbonats, des Dimethylcarbonats und des Ethylacetats 10 - 20 %, 20 - 30 % bzw. 50 - 70 % beträgt.

17. Zusammensetzung nach einem der vorhergehenden Ansprüche, in der die Konzentration des Lithiumbis(oxalatoborats), das im Elektrolyten gelöst ist, weniger als 0,5 mol/l ausmacht.

18. Zusammensetzung nach einem der vorhergehenden Ansprüche, in der die Gesamtkonzentration des Lithiumsalzes zwischen 1 mol/l und 1,5 mol/l beträgt.

19. Zusammensetzung nach einem der vorhergehenden Ansprüche, in der das Molverhältnis des Lithium-bis(oxalatoborats) zum Lithiumhexafluorphosphat weniger als 1 beträgt.

20. Lithium-Akkumulator, der Folgendes umfasst:
- mindestens eine positive Elektrode, die ein Lithiummischoxid und ein Übergangselement wie Co, Ni und Mn enthält,
- mindestens eine negative Elektrode, die ein elektrochemisch aktives Material enthält, bei dem es sich um einen Kohlenstoff handelt, der dazu geeignet ist, Lithiumionen einzubringen, und
- die Zusammensetzung nach einem der vorhergehenden Ansprüche als flüssigen Elektrolyten.

21. Akkumulator nach Anspruch 20, der zum Funktionieren bei Temperaturen bis zu ungefähr -50 °C geeignet ist.

22. Verwendung eines Akkumulators nach einem der Ansprüche 20 oder 21 bei Temperaturen bis zu ungefähr -50 °C.
